# EUROPÄISCHE PATENTSCHRIFT

(11) **EP 1 988 003 B1**
(45) Veröffentlichungstag und Bekanntmachung des Hinweises auf die Patenterteilung: **15.05.2013**
(21) Anmeldenummer: 08162343.1
(22) Anmeldetag: 23.01.2006
(51) Int. Cl.: B62D 3/12, F16H 19/04, F16H 35/02

(54) **Progressives Getriebe**
Progressive Gearing
Transmission progressive

(30) Priorität: 25.01.2005 CH 1082005
(43) Veröffentlichungstag der Anmeldung: 05.11.2008
(62) Teilanmeldung aus: 06706363.6
(73) Patentinhaber: Bless, Werner M., 8630 Rüti ZH (CH)
(72) Erfinder: Bless, Werner M., 8630, Rüti ZH (CH); Rott, Erwin, 8630, Rüti ZH (CH)
(74) Vertreter: Dendorfer, Claus

(56) Entgegenhaltungen:
- DE-A1- 2 618 715
- DE-A1- 10 225 089
- DE-B- 1 146 769
- JP-A- 4 095 570

## Beschreibung

### Technisches Gebiet

Die Erfindung begriff ein progressives Lenkgetriebe für ein Fahrzeug.

### Stand der Technik

Progressive Getriebe werden beispielsweise für Fahrzeuglenkungen, insbesondere für Kraftfahrzeuge, eingesetzt. Üblicherweise wird eine Drehung eines Lenkrads über eine Lenkwelle auf ein Zahnrad übertragen, welches mit einer Zahnstange im Eingriff steht. Das so getriebene Zahnrad verschiebt die Zahnstange, welche die Radstellungen beeinflusst. Bei einer progressiven Lenkung bzw. einem progressiven Getriebe nimmt das Übersetzungsverhältnis von einem grössten Wert in einem Mittelbereich der Lenkradstellung beim Drehen des Lenkrads ab. Dies bedeutet, dass bei Geradeausstellung des Lenkrads eine relativ grosse Bewegung des Lenkrads lediglich eine kleine Richtungsänderung der Fahrspur verursacht. Beim Manövrieren hingegen, wenn das Lenkrad bereits stark eingeschlagen ist, verursacht bereits eine relativ kleine Drehbewegung eine grosse Richtungsänderung. Dies ist speziell beim Parkieren oder beim Befahren von Kurvenstrassen erwünscht.

Im Stand der Technik werden verschiedene Lösungen zur Erzielung eines progressiven Verhaltens des Getriebes vorgeschlagen. Diese Getriebe sind jedoch relativ kompliziert aufgebaut und deshalb entsprechend teuer in der Herstellung und Wartung. Nachteilig an Getrieben, welche aus einer Vielzahl von Teilen bestehen, ist zudem, dass sie oft ein unerwünschtes Spiel aufweisen oder dass Drehmomentschwankungen in Kauf genommen werden müssen. Auch wird der Umkehrpunkt relativ früh erreicht.

DE-A-1'146'769 offenbart ein Lenkgetriebe für Kraftfahrzeuge mit einem veränderiichen Übersetzungsverhältnis, wobei das Getriebe ein Zahnrad und eine Zahnstange umfasst. Das Zahnrad ist dabei unrund gestaltet und exzentrisch gelagert.

DE-A-39' 13'809 schlägt eine Kleinwinkel-Lenkeinrichtung mit einem Paar elliptischer Zahnräder vor.

DE 102 25 089 A1 offenbart ein Getriebe zur Dämpfung oder Beschleunigung einer Bewegung von Cupholdem oder Haltevorrichtungen für Aschenbecher, Handschuhkastenfächer oder Ablagefächer in Kraftfahrzeugen. Das Getriebe weist zwei um eine gemeinsame Drehachse drehbare Stirnzahnräder und ein Zahngebilde mit zwei Zahnstangen auf. Eines der Stirnzahnräder ist kreisrund ausgestaltet, während das andere Stirnzahnrad eine Zahnkurve mit abschnittsweise ansteigendem Krümmungsradius aufweist.

### Darstellung der Erfindung

Es ist eine Aufgabe der Erfindung, ein progressives Getriebe für eine Fahrzeuglenkung zu schaffen.

Diese Aufgabe löst ein Getriebe mit den Merkmalen des Patentanspruchs 1.

Das erfindungsgemässe progressive Getriebe weist ein erstes, ein zweites und ein drittes Stirnzahnrad und eine erste, eine zweite und eine dritte Zahnstange auf. Je eines der Stirnzahnräder vermag mit je einer der Zahnstangen in Eingriff zu kommen. Mindestens eines der Stirnzahnräder weist Zähne auf, welche entlang einer Kurve angeordnet sind. Der Krümmungsradius der Kurve steigt über einen Winkelbereich von mehr als 90° monoton an.

So können die Zähne zumindest eines der Stirnzahnräder entlang einer Kurve angeordnet sein, deren Krümmungsradius über einen Winkelbereich von mehr als 90° monoton ansteigt, wobei der restliche Umfangsbereich des Stirnzahnrads geradlinig ausgebildet ist. Der restliche oder zumindest ein Teil des restlichen Umfangsbereichs kann jedoch auch einer Kurve entsprechen, wobei diese Kurve einen Krümmungsradius aufweisen kann, welcher konstant ist oder auch abnehmen kann. Weitere Ausgestaltungsformen im Rahmen der oben beschriebenen Lehre sind selbstverständlich möglich.

In einer bevorzugten Ausführungsform ist die Kurve mit dem monoton ansteigenden Krümmungsradius mindestens abschnittsweise eine Spirale, deren Mittelpunkt vorzugsweise mit einer Drehachse des Stirnzahnrads zusammenfällt.

Vorzugsweise ist diese Spirale logarithmisch, d.h. sie vergrössert den Abstand zu ihrem Mittelpunkt oder Pol mit jeder Umdrehung um den gleichen Faktor.

In bevorzugten Ausführungsformen sind die Zahnstangen geneigt. Die Zahl der Zahnstangen entspricht vorzugsweise derjenigen der Stirnzahnräder.

Je nach Form der Stirnzahnräder sind die Zahnstangen geradlinig geneigt oder gekrümmt geneigt ausgebildet. Im Fall eines logarithmischen Kurvenabschnitts des Stirnzahnrads ist der zugehörige Bereich der Zahnstange vorzugsweise geradlinig geneigt ausgebildet. Im Falle eines kreisförmigen Kurvenabschnitts des Stirnzahnrads ist die zugehörige Zahnstange geradlinig und horizontal verlaufend ausgebildet, falls der Mittelpunkt des kreisförmigen Kurvenabschnitts in der Drehachse des Stirnzahnrads liegt. Im Falle eines anderen Verlaufs des Kurvenabschnitts des Stirnzahnrads ist der zugehörige Bereich der Zahnstange entsprechend geneigt und/oder gekrümmt ausgebildet.

Dank entsprechender Anpassung der Stirnzahnräder bzw. Ritzel und Zahngebilde kann der jeweilige Endpunkt der Drehbewegung erst nach ¾ der Umdrehung des Stirnzahnrads oder Ritzels bzw. der Lenkwelle erreicht werden, so dass die Lenkwelle zwischen den zwei Endpunkten 1½ Drehungen ausführen kann. Dies wird insbesondere durch Verwendung von drei oder mehr Ritzeln, welche auf mindestens drei parallel versetzt zueinander und mindestens teilweise hintereinander angeordneten Zahnstangen verlaufen, erreicht. Diese Anordnungen weisen ferner den Vorteil auf, dass keine Drehmomentschwankungen auftreten.

Dank der speziellen Form der Zahnräder bzw. Zahnstangen erübrigen sich zusätzliche Bauteile zur Erzielung einer progressiven Lenkung. Die Lenkwelle kann somit direkt am Ritzel befestigt werden, so dass ein spielfreies Getriebe erhalten wird.

In einem vorliegend nicht beanspruchten Vergleichsbeispiel ist das Zahngebilde ein zweites Stirnzahnrad, das ebenfalls Zähne aufweist, welche entlang einer Kurve angeordnet sind, deren Krümmungsradius über einen Winkelbereich von mehr als 90° monoton ansteigt. Vorzugsweise entspricht die Kurve einer logarithmischen Spirale. Das erste Stirnzahnrad ist mit einer Antriebswelle, vorzugsweise der Lenkwelle verbindbar. Das zweite Stirnzahnrad ist mit einer Abtriebswelle, welche vorzugsweise ein konventionelles Ritzel/Zahnstangensystem treibt, verbindbar. Diese Ausführungsform weist den Vorteil auf, dass Fahrzeuge auf einfache und kostengünstige Weise mit dem erfindungsgemässen progressiven Getriebe nachgerüstet werden können.

Das erfindungsgemässe progressive Getriebe weist einen gleichmässigen Drehmomentverlauf auf. Durch symmetrische Anordnung der einzelnen Bauteile bzw. durch Verwendung von drei parallel versetzt zueinander verlaufenden Abwickelstrecken der Stirnzahnräder lässt sich ein symmetrischer Kantenlauf erzielen.

Das erfindungsgemässe progressive Getriebe eignet sich insbesondere für Fahrzeuglenkungen von Kraftfahrzeugen. Es eignet sich sowohl für normale Strassenverkehrsfahrzeuge wie auch für Sportfahrzeuge.

Vorzugsweise besitzt die Kurve, auf welcher die Zähne liegen, dort ihren minimalen Krümmungsradius, wo das Stimzahnrad das Zahngebilde berührt bzw. kämmt, wenn sich das Lenkgetriebe in der Mittelstellung befindet. Dadurch wird erreicht, dass sich das Übersetzungsverhältnis bei kleinen Auslenkungen aus der Mittelstellung relativ langsam ändert und es kann vermieden werden, dass eine Zahnstange, in welche das Stirnzahnrad eingreift, eine ausgeprägte Zykloidenform mit steilen Flanken besitzen muss.

Ausgehend vom minimalen Krümmungsradius sollte der Krümmungsradius der Kurve über einen Winkelbereich von mindestens 90°, insbesondere mindestens 180° monoton ansteigen. Dies erlaubt eine sanfte, gleichmässige Änderung des Übersetzungsverhältnisses über diesen Winkelbereich.

In der Mittelstellung des Lenkgetriebes ist der Abstand zwischen der Drehachse des Stimzahnrads und dem Berührungspunkt des Stimzahnrads mit dem Zahngebilde vorzugsweise minimal, so dass in diesem Bereich das Lenkgetriebe auf Drehungen des Lenkrads am langsamsten reagiert.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1a: eine schematische Seitenansicht eines erfindungsgemässen Getriebes mit Zahnrädern und Zahnstangen in einer ersten Ausführungsform;
- Figur 1b: die Zahnstangen gemäss Figur 1a von oben;
- Figur 1c: eine Graphik der Progression des Getriebes gemäss Figur 1a;
- Figur 1d: eine perspektivische Darstellung eines vorliegend nicht beanspruchten Vergleichsbeispiels
- Figur 2a: mit zwei Zahnstangen; eine Detailansicht eines Zahnrads und einer ersten Variante einer Zahnstange im Bereich ihrer höchsten Erhebung;
- Figur 2b: das Detail der Zahnstange gemäss Figur 2a von oben;
- Figur 3a: eine schematische Seitenansicht eines vorliegend nicht beanspruchten Vergleichsbeispiels mit Zahnrädern und Zahnstangen;
- Figur 3b: die Zahnstangen gemäss Figur 3a von oben;
- Figur 3c: eine Graphik der Progression des Getriebes gemäss Figur 3a;
- Figur 4a: eine schematische Seitenansicht eines vorliegend nicht beanspruchten Vergleichsbeispiels mit Zahnrad und Zahnstange;
- Figur 4b: die Zahnstange gemäss Figur 4a von oben;
- Figur 4c: eine Graphik der Progression des Getriebes gemäss Figur 4a;
- Figur 5a: eine schematische Seitenansicht eines vorliegend nicht beansprucht Vergleichsbeispiels mit Zahnrädern und Zahnstangen;
- Figur 5b: die Zahnstangen gemäss Figur 5a von oben;
- Figur 5c: eine Graphik der Progression des Getriebes gemäss Figur 5a;
- Figur 6a: eine schematische Seitenansicht eines vorliegend nicht beanspruchten Vergleichsbeispiels mit Zahnrädern und Zahnstangen;
- Figur 6b: die Zahnstangen gemäss Figur 6a von oben;
- Figur 6c: eine Graphik der Progression des Getriebes gemäss Figur 6a;
- Figur 7a: eine Detailansicht eines Zahnrads und einer zweiten Variante einer Zahnstange im Bereich ihrer höchsten Erhebung;
- Figur 7b: das Detail der Zahnstange gemäss Figur 7a von oben;
- Figur 8a: eine Detailansicht eines Zahnrads und einer dritten Variante einer Zahnstange im Bereich ihrer höchsten Erhebung;
- Figur 8b: das Detail der Zahnstange gemäss Figur 8a von oben;
- Figur 9a: eine perspektivische Darstellung eines vorliegend nicht beanspruchten Vergleichsbeispiels; und
- Figur 9b: eine schematische Darstellung der Zahnräder gemäss Figur 7a von oben.

### Wege zur Ausführung der Erfindung

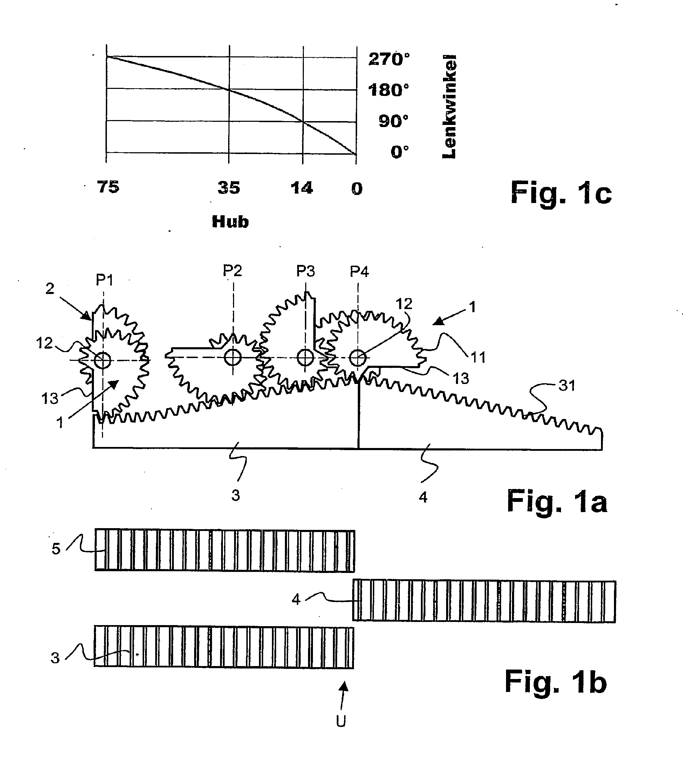

In den Figuren 1a und 1b ist ein erstes Ausführungsbeispiel des erfindungsgemässen progressiven Getriebes dargestellt, wie es beispielsweise in einem Kraftfahrzeug eingesetzt wird. Das Getriebe weist in einem vorliegend nicht beanspruchtan Vergleichsbeispiel zwei, erfindungsgemäß jedoch drei Stirnzahnräder 1, 2 auf, welche um eine gemeinsame Drehachse 12 drehbar sind. Hierzu sind die Stirnzahnräder 1, 2 mit einer hier nicht dargestellten Lenkwelle verbunden. Die Lenkwelle wird mittels eines Lenkrades des Fahrzeugs in die jeweils gewünschte Drehposition gebracht.

Jedes der Stirnzahnräder 1, 2 steht mit einem Zahngebilde in Form einer Zahnstange 3, 4, 5 in Eingriff und lässt sich entlang dieser Zahnstange 3, 4, 5 abwälzen. Entweder verschiebt sich dabei die Drehachse 12 entlang einer vorzugsweise horizontal verlaufenden Geraden oder die Zahnstangen 3, 4, 5 werden entsprechend in ihrer Längsrichtung verschoben. Die dritte Zahnstange 5 ist in der Figur 1b heller dargestellt als die erste und zweite Zahnstange 3, 4.

In Figur 1a sind die drei Stirnzahnräder 1, 2 in mehreren Drehpositionen P1, P2, P3 und P4 entlang der Zahnstangen 4, 5, 6 dargestellt.

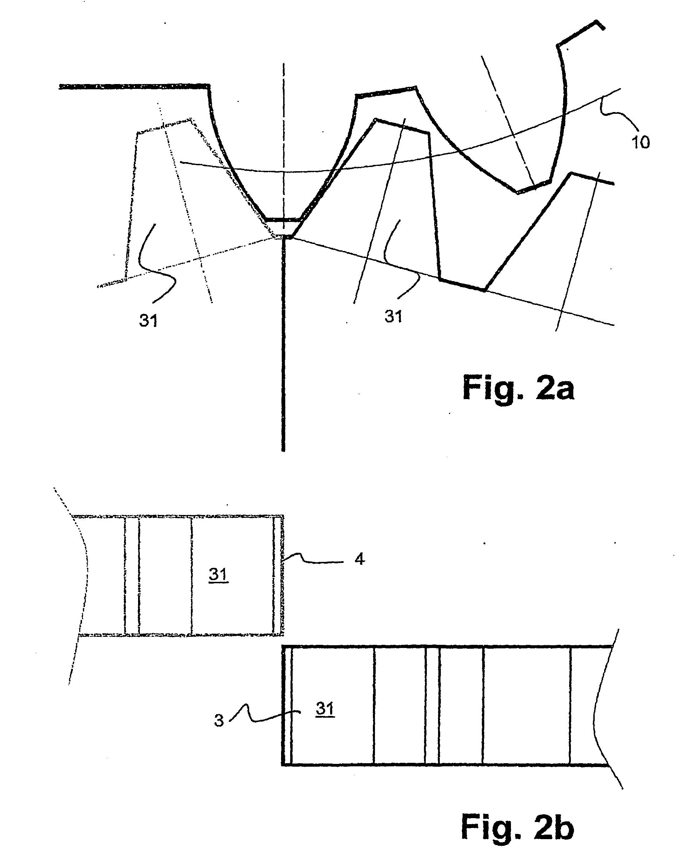

Die Stirnzahnräder 1, 2 weisen Zähne 11 auf, welche entlang einer Kurve 10 (siehe Figur 2a) angeordnet sind. Diese Kurve 10 besitzt einen Krümmungsradius r, welcher über einen Winkelbereich von mehr als 90° der Kurve und somit des Stirnzahnrads 1, 2 monoton ansteigt.

In diesem Beispiel sind die Zähne über einen Winkelbereich von mehr als 180° und weniger als 360° auf der Kurve 10 angeordnet, wobei ein verbleibender Umfangsbereich des Stirnzahnrads 1, 2 zahnlos ausgebildet ist. In der Ausführungsform gemäss den Figuren 1a und 1b ist ein Umfangsbereich von annähernd 270° mit Zähnen 11 bedeckt und der restliche Bereich 13 des Umfangs des Stirnzahnrads ist geradlinig ausgebildet.

Der Mittelpunkt der Kurve 10 verbleibt dabei vorzugsweise relativ zum Stirnzahnrad 1, 2 positionsfest und fällt zudem vorzugsweise mit der Drehachse 12 des Stirnzahnrads 1, 2 zusammen.

Im hier dargestellten Ausführungsbeispiel ist die Kurve 10 eine Spirale, insbesondere eine logarithmische Spirale. Ihr Mittelpunkt fällt vorzugsweise mit der Drehachse 12 des Stirnzahnrads 1, 2 zusammen.

Die in diesem Ausführungsbeispiel verwendeten zwei Stirnzahnräder 1, 2 weisen dieselbe Anzahl Zähne und dieselbe Kurvenform auf. Vorzugsweise sind sie auch im übrigen identisch ausgebildet. Das erste und das zweite Stirnzahnrad 1, 2 sind jedoch in unterschiedlichen Positionen und spiegelsymmetrisch relativ zueinander angeordnet. Vorzugsweise weisen ihre Bereiche mit den längsten Krümmungsradien r in um 180° entgegengesetzte Richtungen, die Bereiche mit den kürzesten Krümmungsradien r jedoch in dieselbe Richtung. Dies ist in Figur 1a in Position P1 und P4 am besten erkennbar. Das dritte Stirnzahnrad ist parallel versetzt zum ersten Zahnrad 1 angeordnet und weist dieselbe Ausrichtung auf wie dieses. Dadurch ist es in Figur 1a deckungsgleich mit dem ersten Stirnzahnrad 1 und deshalb nicht sichtbar.

Die Flankenformen der einzelnen Zähne der Stirnzahnräder 1, 2 und der Zahnstangen 3, 4, 5 sind entsprechend optimiert, um eine möglichst reibungsfreie und geräuscharme Abwicklung der einzelnen Zahnräder 1, 2 auf den Zahnstangen 3, 4, 5 zu ermöglichen. Dies ist jedoch bekanntes Fachwissen und es wird deshalb hier nicht näher darauf eingegangen.

Die Zahnstangen 3, 4, 5 sind in diesem Beispiel geradlinig, jedoch geneigt ausgebildet. Die Neigung ermöglicht unter anderem eine Abwälzung der Stirnzahnräder auf den Zahnstangen bei gleichbleibender Höhe der Rotationsachsen der Stirnzahnräder. Die Zahnstangen sind parallel versetzt zueinander und mindestens teilweise hintereinander angeordnet. Die erste und dritte Zahnstange 3, 5 verlaufen dabei parallel versetzt zueinander, wobei sie nebeneinander angeordnet sind. Vorzugsweise sind sie identisch ausgebildet und weisen dieselbe Steigung auf. Zwischen ihnen ist die zweite Zahnstange 4 angeordnet, wobei ihr Anfangsbereich mit dem Endbereich der ersten und dritten Zahnstange 3, 5 überlappt. Sie weist vorzugsweise dieselbe, aber der ersten und dritten Zahnstange 3, 5 entgegengesetzte Steigung auf. In einem Übergangsbereich U weisen die Zahnstangen 3, 4, 5 jeweils ihre höchste Erhebung auf.

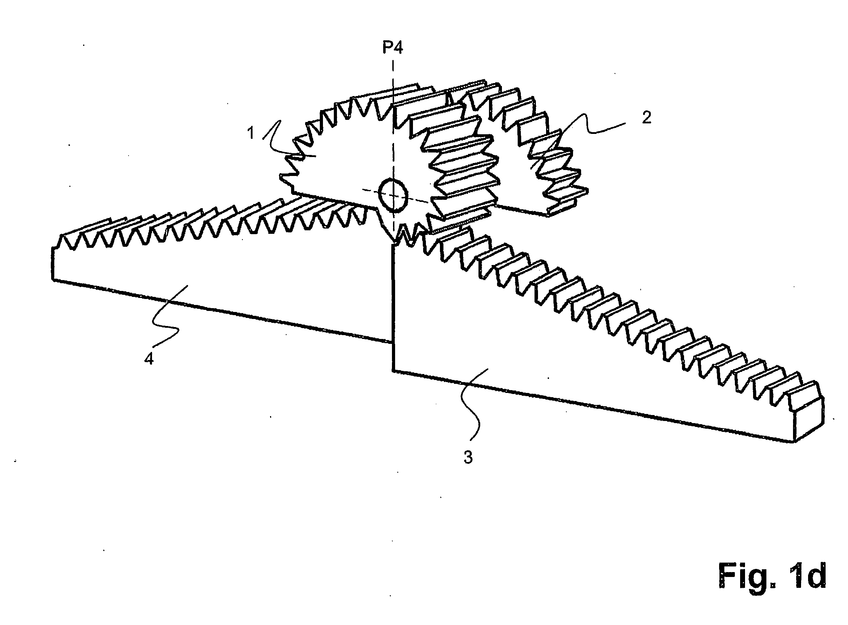

Die Mittelstellung des Lenkrads und somit der Zahnräder 1, 2 entspricht vorzugsweise der Position P4, also wenn sich die Zahnräder 1, 2 auf der höchsten Erhebung der Zahnstangen 3, 4, 5 befinden. Bei Drehung des Lenkrads nach links werden die Positionen P3, P2, und P1 durchlaufen. Dabei greifen das erste und das dritte Zahnrad 1 in die entsprechenden Zahnstangen 3, 5 ein. In Abhängigkeit ihrer Drehstellung kontaktieren die Zahnräder 1 dabei die Zahnstangen in Kontaktlinien bzw. -punkten, welche einem monoton ansteigenden Krümmungsradius der Kurve 10 zugeordnet sind. Das heisst, in Position P4 ist der Zahn des Zahnrads, welcher in die Zahnstange eingreift, dem kleinsten Krümmungsradius zugeordnet, in Position P1 dem grössten. Das mittlere zweite Zahnrad 2 dreht sich ohne Eingriff in eine Zahnstange im leeren Raum. Dieses Drehen ohne Eingriff ist insbesondere in Figur 1d gut erkennbar.

Der Krümmungsradius r der Kurve ist dort minimal, wo sich die Zahnräder 1, 2 und die Zahnstangen 3, 4, 5 bei Mittelstellung des Lenkrads, d.h. in der Position P4, berühren. Der minimale Krümmungsradius der Kurve ist jedoch vorzugsweise grösser als der minimale Abstand zwischen der Kurve bzw. den Zähnen und der Drehachse 12, so dass die Übersetzung bei einer Auslenkung des Lenkrads aus der Mittelstellung kleiner wird.

Wird das Lenkrad nach rechts gedreht, so verlaufen das erste und dritte Zahnrad 1 eingriffslos und das zweite Zahnrad 2 greift in seine entsprechende Zahnstange 4 ein. Auch hier wälzen sie sich aus der Mittelposition P4 vom kleinsten Krümmungsradius zum grössten Krümmungsradius hin ab. In Figur 1d ist erkennbar, wie sich jeweils ein Zahnrad im Eingriff mit einer Zahnstange dreht und das andere Zahnrad bzw. die anderen Zahnräder leer drehen.

Der durch die Abwälzung von Position P4 zur Position P1 erzielte Hub ist in Figur 1c dargestellt. Wie erkennbar ist, kann über einen Winkelbereich von 270° ein monoton anwachsender Hub erreicht werden. Diese bedeutet, dass das Lenkrad um 270° gedreht werden kann, bis der Endpunkt des Getriebes erreicht wird. Da sich das Lenkrad mit derselben Wirkung in beide Richtungen drehen lässt, sind somit 1½ Umdrehungen möglich, bis die jeweiligen Endpunkte erreicht werden.

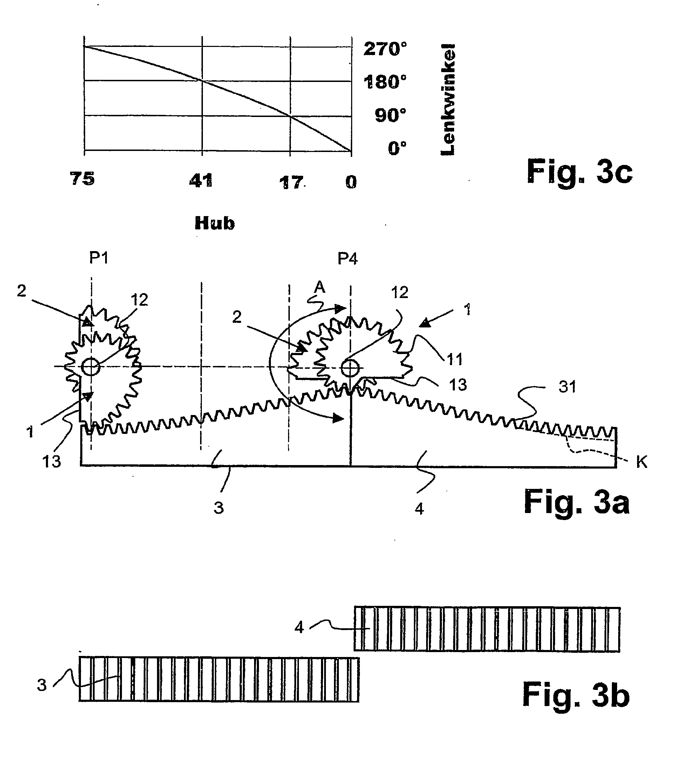

In den Figuren 3a bis 3d ist ein vorliegend nicht beanspruchtes Vergleichsbeispiel dargestellt. Es werden zwei Stirnzahnräder 1, 2 und zwei Zahnstangen 3, 4 verwendet. In Figur 3a sind diese zwei Zahnräder in der Mittelposition P4 und in einer ihrer zwei äussersten Positionen P1 dargestellt. Die Zähne der Stirnzahnräder 1, 2 sind nun über einen Winkelbereich A von annähernd 180° entlang einer logarithmische Spirale angeordnet. Im anschliessenden Winkelbereich von etwas mehr als 90° weist die Kurve einen noch monoton anwachsenden Krümmungsradius auf, die Kurve entspricht jedoch nicht mehr einer logarithmischen Spirale. Der Umfang im restlichen Winkelbereich ist wiederum geradlinig ausgestaltet. Dabei sind die Stirnzahnräder 1, 2 so auf ihrer Drehachse 12 montiert, dass in der Grundstellung des Lenkrads, d.h. im Bereich der höchsten Erhebung der Zahnstangen 3,4, zuerst der Bereich mit der Form der logarithmischen Spirale abgewälzt wird.

Angepasst an die Form der Stirnzahnräder 1, 2 sind die Zahnstangen 3, 4 zuerst, d.h. startend von ihrer höchsten Erhebung aus, geradlinig geneigt ausgebildet und gehen anschliessend in eine geneigte, aber gekrümmte Kurve K über.

In Figur 3c ist wiederum der Hub in Abhängigkeit des Lenkwinkels dargestellt. Im Vergleich zur ersten Ausführungsform gemäss den Figuren 1a bis 1c verläuft nun Graph im Winkelbereich zwischen 180° und 270° schwächer gekrümmt.

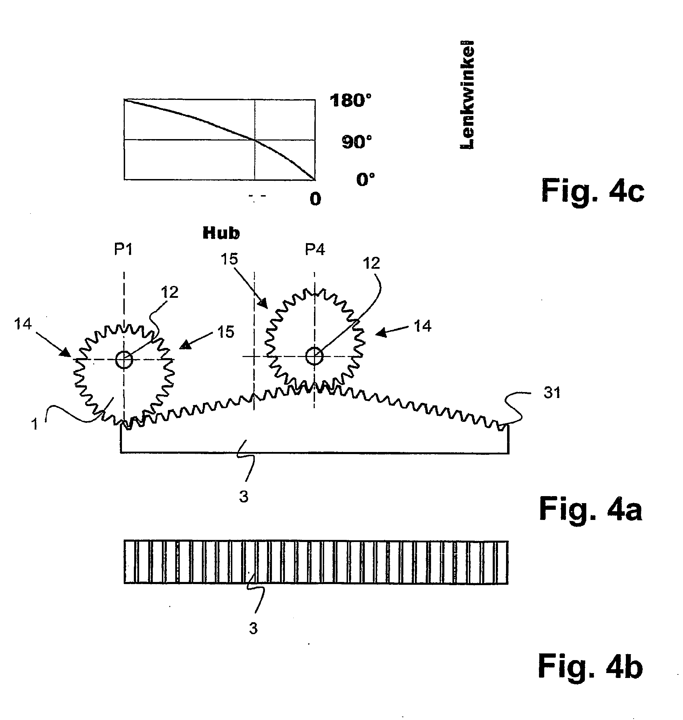

In dem vorliegend nicht beanspruchten Vergleichsbeispiel gemäss den Figuren 4a bis 4c sind nur ein Stirnzahnrad 1 und nur eine Zahnstange 3 vorhanden, wobei das Zahnrad 1 wiederum in seiner Mittelposition P4 und in einer seiner zwei äussersten Positionen P1 dargestellt ist. Die Zähne 11 des Stirnzahnrads 1 sind bezüglich positiver und negativer Drehungen des Zahnrads 1 ausgehend von seiner Mittelstellung symmetrisch auf der Kurve angeordnet. Die Zähne 11 lassen sich in zwei Zahngruppen 14, 15 gruppieren. Jeder Zahngruppe 14, 15 ist eine Kurve 10 zuzuordnen, wobei sich die zwei Kurven 10 jeweils über eine Winkelbereich von 180° erstrecken. Sie sind spiegelsymmetrisch zu einer Ebene, in welcher die Drehachse 12 liegt, und weisen denselben Mittelpunkt auf, welcher vorzugsweise mit der Drehachse 12 zusammenfällt. Ihr Umlaufsinn ist jedoch entgegengesetzt. Dadurch wird ein "eiförmiges" Zahnrad erhalten, bei welchem der Übergang von einer Kurve in die andere stetig verläuft, so dass die jeweils grössten bzw. kleinsten Krümmungsradien zusammenfallen. Die Zahnstange 3 ist, falls die zwei Kurven des Zahnrads 1 je eine logarithmische Spirale sind, wiederum geradlinig ausgebildet, wobei sie in beide Richtungen, ausgehend von der Mittelstellung als höchsten Punkt, geneigt ist. Wie in Figur 4c erkennbar ist, ist die Auslenkung auf jeder Seite 180°. Dafür weist das Getriebe eine minimale Anzahl Bauteile auf und lässt sich entsprechend kompakt und platzsparend ausbilden. Zudem ist die Herstellung kostengünstig.

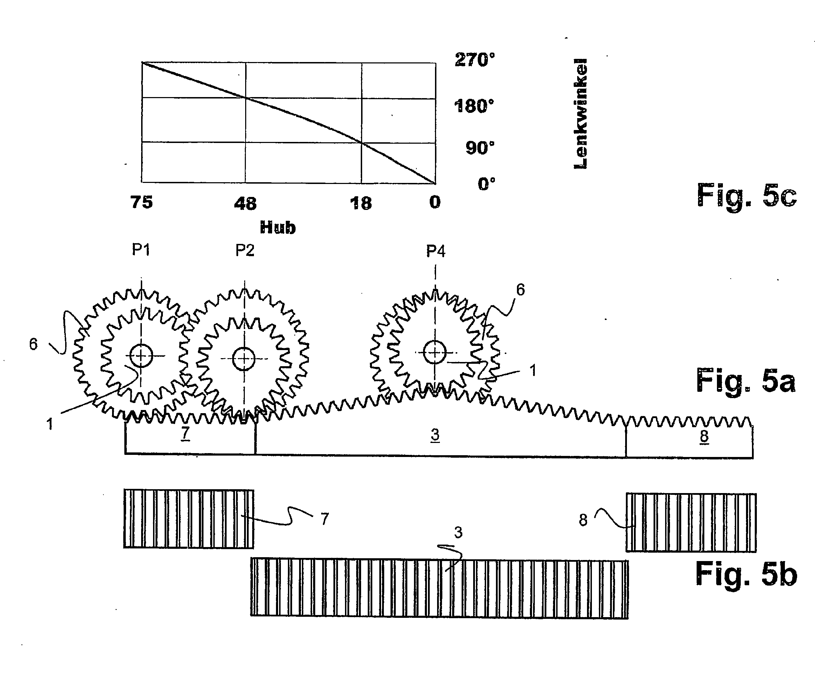

Das vorliegend nicht beanspruchte Vergleichsbeispiel gemäss den Figuren 5a bis 5c verwendet wiederum zwei Stirnzahnräder 1, 6 und drei mindestens teilweise hintereinander und teilweise parallel versetzt zueinander angeordnete Zahnstangen 3, 7, 8. Die Zahnräder 1, 6 sind in drei Positionen P1, P2, P4 dargestellt. Das erste Zahnrad 1 ist ein Zahnrad gemäss der in Figur 4a dargestellten Ausführungsform und die zum ersten Zahnrad 1 gehörende Zahnstange 3 ist geradlinig und in zwei Richtungen geneigt ausgebildet. Beim zweiten Zahnrad 6 sind die Zähne auf einem Kreis oder einer Ellipse angeordnet. Dieses Zahnrad 6 wälzt sich auf zwei Zahnstangen 7, 8 ab. Die Zähne dieser Zahnstangen 7, 8 sind entlang einer horizontal und geradlinig verlaufenden Linie angeordnet. Ausgehend von der Mittelposition P4 lassen sich die gemeinsam gelagerten Zahnräder nach rechts oder links drehen. In Figur 5a sind einzelne Positionen bei Drehung nach links dargestellt. Zuerst greift das spiralförmige Zahnrad 1 in die zugehörige geneigte Zahnstange 3 ein. Das runde Zahnrad 6 dreht leer. Wird die 180° Drehposition erreicht, so endet die geneigte Zahnstange 3 und das spiralförmige Zahnrad 1 dreht nun ins Leere. Dafür hat dank dem Überlappungsbereich der zwei Zahnstangen 3, 7 das runde Zahnrad 6 übernommen und wälzt sich nun auf der ersten geraden Zahnstange 7 über einen weiteren Winkelbereich von mindestens 90° ab. Bei Drehung nach rechts kämmt das runde Zahnrad 6 die zweite gerade Zahnstange 8, welche als geradlinige, aber in Längsrichtung beabstandete Verlängerung der ersten geraden Zahnstange 7 angeordnet ist. Wie in Figur 5c erkennbar ist, erfolgt der Endpunkt bei dieser Anordnung wiederum erst nach 270° pro Drehrichtung, wobei im Lenkwinkelbereich zwischen 180° und 270° der Hub geradlinig verläuft. Der Hubverlauf bei grossen Auslenkungen lässt sich wählen, indem anstelle des runden Zahnrads und der geraden Zahnstange entsprechend angepasste Kurvenformen verwendet werden, wie sie anhand des Beispiels gemäss den Figuren 3a bis 3d erläutert wurden. Als Variante zu dieser Anordnung lässt sich zudem der horizontal verlaufende Zahnstangenbereich beliebig verlängern, um mehr Umdrehungen zu ermöglichen. Diese Variante eignet sich insbesondere für Nutzfahrzeuge.

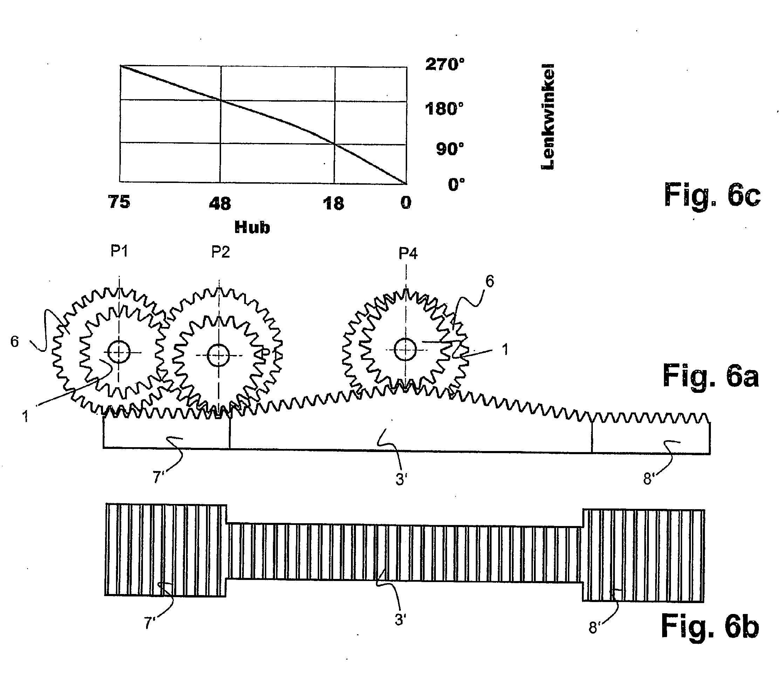

Das vorliegend nicht beanspruchte Vergleichsbeispiel gemäss den Figuren 6a bis 6c entspricht im wesentlichen demjenigen der Figuren 5a bis 5c. Hier ist sind die zwei geraden Zahnstangen jedoch nicht getrennte Gebilde, sondern einstückig an der geneigten Zahnstange angeformt oder zumindest mit dieser verbunden. Dadurch wird eine Zahnstange erhalten, welche mindestens einen, hier zwei breite Bereiche 7', 8' und einen mittleren schmalen Bereich 3' aufweist. In Abhängigkeit der Drehstellung der Lenkwelle und somit der Zahnräder 1, 6 greift nun das spiralförmige Zahnrad 1 in den schmalen Bereich 3' ein oder das runde Zahnrad 6' greift in einen der breiten Bereiche 7', 8' ein. In Figur 6b ist erkennbar, dass die Zahnstange auf beiden Seiten verbreitert ist. Diese Form empfiehlt sich, wenn anstelle von einem runden Zahnrad 6 zwei runde Zahnräder verwendet werden, welche auf je einer Seite des spiralförmigen Zahnrads 1 angeordnet sind. Dadurch wird wiederum ein symmetrischer Kantenlauf gewährleistet.

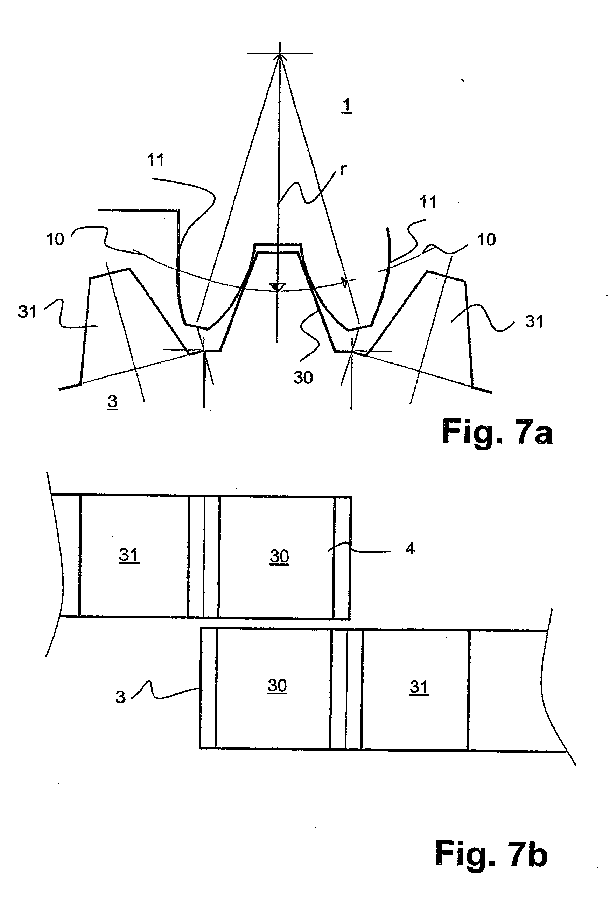

Der Bereich der höchsten Erhebung der Zahnstange kann auf unterschiedliche Weise gestaltet sein. In den Figuren 7a und 7b ist eine erste Variante dargestellt. Hier ist die höchste Erhebung mit einem Mittelzahn 30 versehen, wobei in diesem Beispiel beide bzw. im Fall von drei Zahnstangen alle drei Zahnstangen einen derartigen Mittelzahn 30 aufweisen. Diese Anordnung ermöglicht einen gleichmässigen Verlauf.

In den Figuren 2a und 2b ist eine weitere Variante der Ausbildung der höchsten Erhebung der Zahnstangen dargestellt. Hier ist nun kein Mittelzahn vorhanden, sondern jede Zahnstange endet mit einem schräg gestellten Zahn 31, dessen Winkel und Abstand zum nächsten Zahn derselben Zahnstange der Anordnung der restlichen Zähne dieser Zahnstange entspricht. Dabei endet die eine Zahnstange bevor die andere beginnt, d.h. es sind keine überlappenden Zähne vorhanden. Diese Variante ist einfach herzustellen.

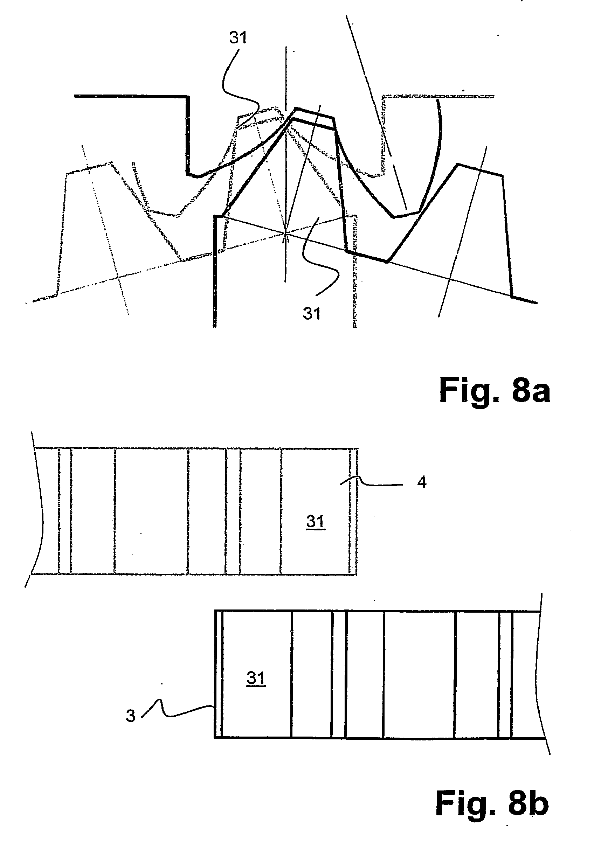

Bei der Ausgestaltung der höchsten Erhebung gemäss den Figuren 8a und 8b sind die Zahnstangen gemäss dem obigen Ausführungsbeispiel geformt, d.h. die obersten Zähne 31 sind schräggestellt und entsprechen den übrigen Zähnen. In diesem Fall hier überlappen sie jedoch mit dem obersten Zahn 31 der benachbarten Zahnstange. Diese Variante weist den Vorteil auf, dass sie wiederum einfach herstellbar ist, dass jedoch die Abwälzung der Ritzel gleichmässiger verläuft als bei der Variante gemäss den Figuren 2a und 2b.

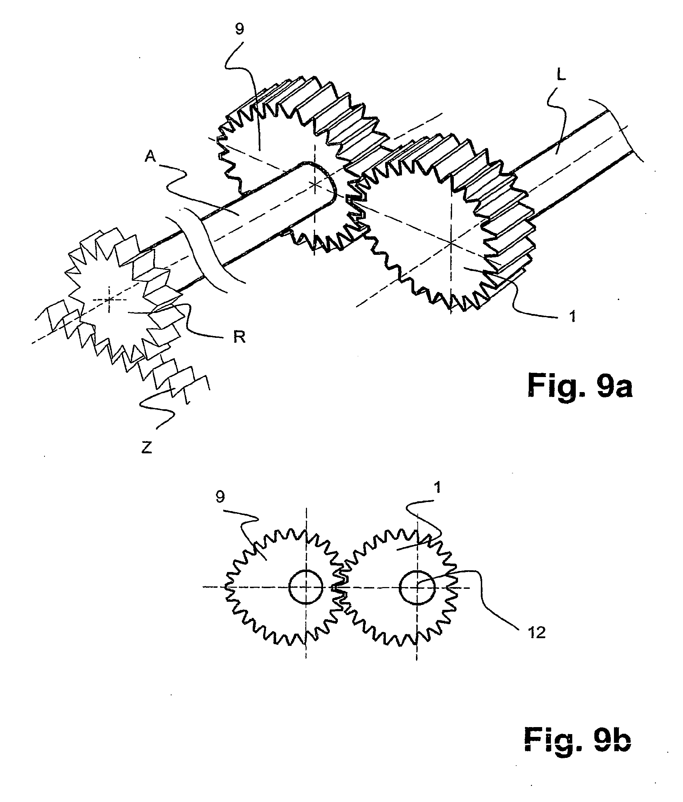

Das vorliegend nicht beanspruchte Vergleichsbeispiel gemäss den Figuren 9a und 9b unterscheidet sich von den vorhergehenden insbesondere darin, dass das Zahngebilde keine Zahnstange, sondern ein weiteres Stirnzahnrad, ein Abtriebsrad 9, ist. Das Stirnzahnrad 1 ist über die hier nun teilweise dargestellte Antriebs- oder Lenkwelle L mit dem Lenkrad verbunden und entspricht einem Antriebsrad. Dieses ist über eine Abtriebswelle A mit einem Ritzel R und einer Zahnstange Z eines konventionellen Ritzel/Zahnstangengetriebes verbunden.

Das Abtriebszahnrad 9 weist vorzugsweise dieselbe Form auf wie das Zahnrad gemäss Figur 4a und wird hier deshalb nicht mehr im Detail beschrieben. Es kämmt mit seinen Zähnen 10 das Abtriebsrad 9, welches vorzugsweise ebenfalls wie das Zahnrad gemäss Figur 4a ausgebildet ist und somit dieselbe Kurvenform und dieselbe Anzahl Zähne aufweist wie das Antriebsrad 1. Vorzugsweise sind die zwei Stirnzahnräder 1, 9 identisch ausgebildet. Sie können jeweils zwei logarithmische Spiralen aufweisen oder auch andere Kurvenformen aufweisen, solange die Krümmungsradien der Kurven über einen Winkelbereich von 90° monoton ansteigen und sie sich gegenseitig ergänzen. Die Mittelpunkte der Kurven fallen im hier dargestellten Beispiel wiederum mit den Drehachsen der jeweiligen Zahnräder zusammen. In den Figuren 9a und 9b sind sie übrigens in einer Drehstellung dargestellt, welche nicht der Mittelstellung des Lenkrads, sondern der um 180° gedrehten Stellung entspricht.

In den oben beschriebenen Beispielen fallen die Mittelpunkte der Kurven jeweils mit den Drehachsen der Zahnräder zusammen. Zudem sind die Drehachsen auch die Lagerachse der Zahnräder. Dies sind bevorzugte Ausführungsformen. Es ist jedoch auch möglich, die Zahnräder anders zu lagern bzw. die Drehachsen ausserhalb der Mittelpunkte der Kurven anzuordnen. Wie bereits oben erwähnt ist die logarithmische Spirale die bevorzugte Kurvenform, wobei andere Kurven, welche über einen Winkelbereich von mindestens 90° monoton ansteigende Krümmungsradien aufweisen, ebenfalls möglich sind, sofern die Zahnstange bzw. das mit dem Zahnrad kämmende weitere Zahnrad entsprechend angepasst geformt ist. Des weiteren sei noch festgehalten, dass auch Kombinationen der Lehren der einzelnen Ausführungsformen und vorliegend nicht beanspruchten Vergleichsbeispiele möglich und Teil dieser Offenbarung sind. Der Schutzbereich wird durch die Ansprüche definiert.

### Bezugszeichenliste

- 1: Erstes Stirnzahnrad
- 10: Kurve
- 11: Zahn
- 12: Drehachse
- 13: Restliche Bereich
- 14: Erste Zahngruppe
- 15: Zweite Zahngruppe
- 2: Zweites Stirnzahnrad
- 3: Erste Zahnstange
- 3': schmaler Bereich
- 30: Mittelzahn
- 31: Zähne
- 4: Zweite Zahnstange
- 5: Dritte Zahnstange
- 6: Rundes Zahnrad
- 7: Erste gerade Zahnstange
- 7': breiter Bereich
- 8: Zweite gerade Zahnstange
- 8': schmaler Bereich
- 9: Abtriebsrad
- A: Abtriebswelle
- L: Lenkwelle
- R: Ritzel
- Z: Zahnstange
- r: Krümmungsradius
- P1, P2, P3, P4: Drehposition
- U: Überlappungsbereich
- K: gekrümmte Linie

## Patentansprüche

1. Progressives Lenkgetriebe für ein Fahrzeug, mit:
- einem ersten, einem zweiten und einem dritten Stirnzahnrad (1, 2), die um eine gemeinsame Drehachse (12) drehbar sind, wobei das zweite Stirnzahnrad (2) zwischen dem ersten und dem dritten Stirnzahnrad (1) angeordnet ist, und
- einer ersten, einer zweiten und einer dritten Zahnstange (3, 4, 5), die parallel versetzt zueinander und mindestens teilweise hintereinander angeordnet sind, wobei
- mindestens eines der Stirnzahnräder (1, 2) Zähne (11) aufweist, welche entlang einer Kurve (10) angeordnet sind, die einen Krümmungsradius (r) aufweist, welcher über einen Winkelbereich von mehr als 90° der Kurve (10) monoton ansteigt,
- das erste Stirnzahnrad (1) mit der ersten Zahnstange (3) in Eingriff zu kommen vermag, das zweite Stirnzahnrad (2) mit der zweiten Zahnstange (4) in Eingriff zu kommen vermag, und das dritte Stirnzahnrad mit der dritten Zahnstange (5) in Eingriff zu kommen vermag,
- das dritte Stirnzahnrad an der gemeinsamen Drehachse (12) parallel versetzt und deckungsgleich zum ersten Stirnzahnrad (1) angeordnet ist, und
- die erste und die dritte Zahnstange (3, 5) identisch ausgebildet sind.

2. Getriebe nach Anspruch 1, wobei
- in ersten Positionen des Lenkgetriebes das erste Stirnzahnrad (1) in die erste Zahnstange (3) eingreift und das dritte Stirnzahnrad in die dritte Zahnstange eingreift (5) und sich das zweite Stirnzahnrad (2) ohne Eingriff im leeren Raum dreht, und wobei
- in zweiten Positionen des Lenkgetriebes das zweite Stirnzahnrad (2) in die zweite Zahnstange (4) eingreift und sich das erste und dritte Stirnzahnrad (1) eingriffslos drehen.

3. Getriebe nach Anspruch 1 oder Anspruch 2, wobei das erste Stirnzahnrad (1) und das zweite Stirnzahnrad (2) spiegelsymmetrisch relativ zueinander an der gemeinsamen Drehachse (12) angeordnet sind.

4. Getriebe nach einem der Ansprüche 1 bis 3, wobei die erste und die dritte Zahnstange (3, 5) dieselbe Steigung aufweisen und die zweite Zahnstange (4) eine Steigung aufweist, die der Steigung der ersten und dritten Zahnstange (3, 5) entgegengesetzt ist.

5. Getriebe nach Anspruch 4, wobei die Zahnstangen (3, 4, 5) in einem einander benachbarten Bereich jeweils eine höchste Erhebung aufweisen.

6. Getriebe nach einem der Ansprüche 1 bis 5, wobei
- mindestens eine der Zahnstangen (3, 4, 5) geneigt ausgebildet ist, und wobei vorzugsweise
- mindestens eine geneigte Zahnstange (3, 4, 5) in ihrer höchsten Erhebung einen Mittelzahn aufweist.

7. Getriebe nach einem der Ansprüche 1 bis 6, wobei zumindest zwei der Stirnzahnräder (1, 2) jeweils dieselbe Anzahl Zähne und/oder jeweils dieselbe Kurvenform aufweisen.

8. Getriebe nach einem der Ansprüche 1 bis 7, wobei zumindest eines der Stirnzahnräder (1, 2) eine erste und eine zweite Zahngruppe aufweist, wobei die erste und zweite Zahngruppe jeweils entlang einer ersten beziehungsweise zweiten Kurve (10) angeordnet sind, wobei sich die erste und zweite Kurve (10) jeweils über einen Winkelbereich des Stirnzahnrads (1, 2) von 180° erstreckt und wobei die zwei Kurven (10) spiegelsymmetrisch sind.

9. Getriebe nach einem der Ansprüche 1 bis 7, wobei das zweite Stirnzahnrad (2) eine erste und eine zweite Zahngruppe aufweist, wobei die erste und zweite Zahngruppe jeweils entlang einer ersten beziehungsweise zweiten Kurve (10) angeordnet sind, wobei sich die erste und zweite Kurve (10) jeweils über einen Winkelbereich des zweiten Stirnzahnrads (2) von 180° erstreckt und wobei die zwei Kurven (10) spiegelsymmetrisch sind.

10. Getriebe nach einem der Ansprüche 1 bis 9, wobei für zumindest eines der Stirnzahnräder (1, 2) die Zähne (11) über einen Winkelbereich von mehr als 180° und weniger als 360°, insbesondere von annähernd 270°, auf der Kurve (10) angeordnet sind und wobei ein verbleibender Umfangsbereich des Stirnzahnrads (1, 2) zahnlos ausgebildet ist.

11. Getriebe nach einem der Ansprüche 1 bis 7, wobei für jedes der Stirnzahnräder (1, 2) die Zähne (11) über einen Winkelbereich von mehr als 180° und weniger als 360°, insbesondere von annähernd 270°, auf der Kurve (10) angeordnet sind und wobei ein verbleibender Umfangsbereich des Stirnzahnrads (1, 2) zahnlos ausgebildet ist.

12. Getriebe nach einem der Ansprüche 1 bis 11, wobei für zumindest eines der Stirnzahnräder (1, 2):
- die Kurve (10) des Stirnzahnrads (1, 2) eine Spirale ist, und/oder
- die Kurve (10) des Stirnzahnrads (1, 2) mindestens bereichsweise eine logarithmische Spirale ist, und/oder
- die Kurve (10) des Stirnzahnrads (1, 2) über mindestens einen Winkelbereich von 90° eine logarithmische Spirale ist, und/oder
- die Kurve (10) des Stirnzahnrads (1, 2) einen Mittelpunkt aufweist, welcher mit der Drehachse (12) des Stirnzahnrads (1, 2) zusammenfällt.

13. Getriebe nach einem der Ansprüche 1 bis 12, wobei
- mindestens eine der Zahnstangen (3, 4, 5) Zähne aufweist, welche geradlinig angeordnet sind, und/oder
- mindestens eine der Zahnstangen (3, 4, 5) Zähne aufweist, welche entlang einer gekrümmten Linie (K) angeordnet sind.

14. Getriebe nach einem der Ansprüche 1 bis 13, wobei
- in einer Mittelstellung des Lenkgetriebes für mindestens eines der Stirnzahnräder (1, 2) die Kurve (10) in einem Berührungsbereich dieses Stirnzahnrads (1, 2) mit der jeweiligen Zahnstange (3, 4, 5) einen minimalen Krümmungsradius aufweist, und wobei vorzugsweise
- der Krümmungsradius (r) der Kurve ausgehend vom minimalen Krümmungsradius über einen Winkelbereich von mindestens 90°, insbesondere mindestens 180°, monoton ansteigt.

15. Getriebe nach einem der Ansprüche 1 bis 14, bei dem in einer Mittelstellung des Lenkgetriebes der Abstand zwischen der gemeinsamen Drehachse (12) der Stirnzahnräder (1, 2) und einem Berührungsbereich mindestens eines der Stirnzahnräder (1, 2) mit der jeweiligen Zahnstange (3, 4, 5) minimal ist.

## Claims

1. A progressive steering gear for a vehicle, comprising:
- a first, a second and a third spur gear (1, 2) that are rotatable about a common axis of rotation (12), wherein the second spur gear (2) is arranged between the first and the third spur gear (1), and
- a first, a second and a third rack (3, 4, 5), which are arranged staggered parallel to each other and at least partly one after the other, wherein
- at least one of the spur gears (1, 2) comprises teeth (11) arranged along a curve (10) that has a radius of curvature (r) which monotonically increases over an angular range of more than 90° of the curve (10),
- the first spur gear (1) is adapted to mesh with the first rack (3), the second spur gear (2) is adapted to mesh with the second rack (4), and the third spur gear is adapted to mesh with the third rack (5),
- the third spur gear is arranged at the common axis of rotation (12) staggered parallel and coinciding with the first spur gear (1), and
- the first and the third rack (3, 5) are configured identically.

2. The gear as set forth in claim 1, wherein
- in first positions of the steering gear the first spur gear (1) meshes with the first rack (3) and the third spur gear meshes with the third rack (5), and the second spur gear (2) turns out of mesh in empty space, and wherein
- in second positions of the steering gear the second spur gear (2) meshes with the second rack (4), and the first and the third spur gear (1) turn out of mesh.

3. The gear as set forth in claim 1 or claim 2, wherein the first spur gear (1) and the second spur gear (2) are arranged mirror symmetrical relative to each other on the common axis of rotation (12).

4. The gear as set forth in any one of claims 1-3, wherein the first and the third rack (3, 5) have the same slope, and wherein the second rack (4) has a slope that is opposite to that of the first and the third rack (3, 5).

5. The gear as set forth in claim 4, wherein the racks (3, 4, 5) each comprise a highest elevation in respective regions adjacent to each other.

6. The gear as set forth in any one of claims 1-5, wherein
- at least one of the racks (3, 4, 5) is configured ramped, and wherein preferably
- at least one ramped rack (3, 4, 5) comprises a middle tooth at its highest elevation.

7. The gear as set forth in any one of claims 1-6, wherein at least two of the spur gears (1, 2) each have the same number of teeth and/or the same shape of curve.

8. The gear as set forth in any one of claims 1-7, wherein at least one of the spur gears (1, 2) comprises a first and a second group of teeth, the first and the second group of teeth each being arranged along a first and a second curve (10) respectively, the first and the second curve (10) each extending over an angular range of the spur gear (1, 2) of 180°, the two curves (10) being mirror symmetrical.

9. The gear as set forth in any one of claims 1-7, wherein the second spur gear (2) comprises a first and a second group of teeth, the first and the second group of teeth each being arranged along a first and a second curve (10) respectively, the first and the second curve (10) each extending over an angular range of the second spur gear (2) of 180°, the two curves (10) being mirror symmetrical.

10. The gear as set forth in any one of claims 1-9, wherein, for at least one of the spur gears (1, 2), the teeth (11) are arranged over an angular range of more than 180° and less than 360°, in particular approximately 270°, on the curve (10), and a remaining circumferential portion of said spur gear (1, 2) is configured toothless.

11. The gear as set forth in any one of claims 1-7, wherein, for each of the spur gears (1, 2), the teeth (11) are arranged over an angular range of more than 180° and less than 360°, in particular approximately 270°, on the curve (10), and a remaining circumferential portion of said spur gear (1, 2) is configured toothless.

12. The gear as set forth in any one of claims 1-11, wherein, for at least one of the spur gears (1, 2):
- the curve (10) of the spur gear (1, 2) is a spiral, and/or
- the curve (10) of the spur gear (1, 2) is a logarithmic spiral at least portionwise, and/or
- the curve (10) of the spur gear (1, 2) is a logarithmic spiral over at least an angular range of 90°, and/or
- the curve (10) of the spur gear (1, 2) comprises a center point which coincides with the axis of rotation (12) of the spur gear (1, 2).

13. The gear as set forth in any one of claims 1-12, wherein
- at least one of the racks (3, 4, 5) comprises teeth arranged linear, and/or
- at least one of the racks (3, 4, 5) comprises teeth arranged along a curved line (K).

14. The gear as set forth in any one of claims 1-13, wherein
- in a center position of the steering gear, for at least one of the spur gears (1, 2), the curve (10) has a minimum radius of curvature (r) in a region in which this spur gear (1, 2) contacts the respective rack (3, 4, 5), and wherein preferably
- the radius of curvature (r) of the curve, starting from the minimum radius of curvature, monotonically increases over an angular range of at least 90°, in particular at least 180°.

15. The gear as set forth in any one of claims 1-14, wherein, in a center position of the steering gear, the distance between the common axis of rotation (12) of the spur gears (1, 2) and a contact region of at least one of the spur gears (1, 2) with the respective rack (3, 4, 5) is a minimum.

## Revendications

1. Mécanisme de direction progressive pour un véhicule comprenant :
- une première, une deuxième et une troisième roues dentées frontales (1, 2) qui peuvent tourner autour d'un axe de rotation commun (12), dans lequel la deuxième roue dentée frontale (2) est disposée entre la première et la troisième roues dentées frontales (1), et
- une première, une deuxième et une troisième crémaillères (3, 4, 5) qui sont disposées de manière décalée parallèlement les unes aux autres et au moins partiellement les unes derrière les autres, dans lequel
- au moins une des roues dentées frontales (1, 2) présente des dents (11) qui sont disposées le long d'une courbe (10) qui présente un rayon de courbure (r) qui croît de manière monotone sur une plage angulaire supérieure à 90° de la courbe (10),
- la première roue dentée frontale (1) peut venir s'engager avec la première crémaillère (3), la deuxième roue dentée frontale (2) peut venir s'engager avec la deuxième crémaillère (4) et la troisième roue dentée frontale peut venir s'engager avec la troisième crémaillère (5),
- la troisième roue dentée frontale est disposée sur l'axe de rotation commun (12) de manière décalée parallèlement à et coïncidant avec la première roue dentée frontale (1), et
- la première et la troisième crémaillères (3, 5) sont réalisées de manière identique.

2. Mécanisme selon la revendication 1, dans lequel
- dans des premières positions du mécanisme de direction, la première roue dentée frontale (1) s'engage dans la première crémaillère (3) et la troisième roue dentée frontale s'engage dans la troisième crémaillère (5), et la deuxième roue dentée frontale (2) tourne dans l'espace vide sans engagement, et dans lequel
- dans des secondes positions du mécanisme de direction, la deuxième roue dentée frontale (2) s'engage dans la deuxième crémaillère (4) et les première et troisième roues dentées frontales (1) tournent sans engagement.

3. Mécanisme selon la revendication 1 ou la revendication 2, dans lequel la première roue dentée frontale (1) et la deuxième roue dentée frontale (2) sont disposées à symétrie de miroir l'une par rapport à l'autre sur l'axe de rotation commun (12).

4. Mécanisme selon l'une quelconque des revendications 1 à 3, dans lequel la première et la troisième crémaillères (3, 5) présentent la même pente et la deuxième crémaillère (4) présente une pente qui est opposée à la pente des première et troisième crémaillères (3, 5).

5. Mécanisme selon la revendication 4, dans lequel les crémaillères (3, 4, 5) présentent chacune une élévation la plus haute dans une région voisine les unes des autres.

6. Mécanisme selon l'une quelconque des revendications 1 à 5, dans lequel
- au moins une des crémaillères (3, 4, 5) est réalisée de manière inclinée, et dans lequel
- au moins une crémaillère inclinée (3, 4, 5) présente de préférence une dent centrale dans son élévation la plus haute.

7. Mécanisme selon l'une quelconque des revendications 1 à 6, dans lequel au moins deux des roues dentées frontales (1, 2) présentent chacune le même nombre de dents et/ou chacune la même forme de courbe.

8. Mécanisme selon l'une quelconque des revendications 1 à 7, dans lequel au moins une des roues dentées frontales (1, 2) présente un premier et un second groupes de dents, dans lequel les premier et second groupes de dents sont chacun disposés le long d'une première ou seconde courbe (10), dans lequel les première et seconde courbes (10) s'étendent chacune sur une plage angulaire de la roue dentée frontale (1, 2) de 180° et dans lequel les deux courbes (10) sont à symétrie de miroir.

9. Mécanisme selon l'une quelconque des revendications 1 à 7, dans lequel la deuxième roue dentée frontale (2) présente un premier et un second groupes de dents, dans lequel les premier et second groupes de dents sont chacun disposés le long d'une première ou seconde courbe (10), dans lequel les première et seconde courbes (10) s'étendent chacune sur une plage angulaire de la deuxième roue dentée frontale (2) de 180° et dans lequel les deux courbes (10) sont à symétrie de miroir.

10. Mécanisme selon l'une quelconque des revendications 1 à 9, dans lequel pour au moins une des roues dentées frontales (1, 2), les dents (11) sont disposées sur une plage angulaire de plus de 180° et moins de 360°, notamment d'environ 270°, sur la courbe (10) et dans lequel une plage périphérique restante de la roue dentée frontale (1, 2) est réalisée sans dents.

11. Mécanisme selon l'une quelconque des revendications 1 à 7, dans lequel pour chacune des roues dentées frontales (1, 2), les dents (11) sont disposées sur une plage angulaire de plus de 180° et moins de 360°, notamment d'environ 270°, sur la courbe (10) et dans lequel une plage périphérique restante de la roue dentée frontale (1, 2) est réalisée sans dents.

12. Mécanisme selon l'une quelconque des revendications 1 à 11, dans lequel pour au moins une des roues dentées frontales (1, 2) :
- la courbe (10) de la roue dentée frontale (1, 2) est une spirale, et/ou
- la courbe (10) de la roue dentée frontale (1, 2) est une spirale logarithmique au moins par région, et/ou
- la courbe (10) de la roue dentée frontale (1, 2) est une spirale logarithmique sur au moins une plage angulaire de 90°, et/ou
- la courbe (10) de la roue dentée frontale (1, 2) présente un point central qui coïncide avec l'axe de rotation (12) de la roue dentée frontale (1, 2).

13. Mécanisme selon l'une quelconque des revendications 1 à 12, dans lequel
- au moins une des crémaillères (3, 4, 5) présente des dents qui sont disposées de manière linéaire, et/ou
- au moins une des crémaillères (3, 4, 5) présente des dents qui sont disposées le long d'une ligne courbée (K).

14. Mécanisme selon l'une quelconque des revendications 1 à 13, dans lequel
- dans une position centrale du mécanisme de direction pour au moins une des roues dentées frontales (1, 2), la courbe (10) présente dans une région de contact de cette roue dentée frontale (1, 2) avec la crémaillère respective (3, 4, 5) un rayon de courbure minimal, et dans lequel
- le rayon de courbure (r) de la courbe croît de préférence de manière monotone en partant du rayon de courbure minimal sur une plage angulaire d'au moins 90°, notamment d'au moins 180°.

15. Mécanisme selon l'une quelconque des revendications 1 à 14, dans lequel, dans une position centrale du mécanisme de direction, l'écart entre l'axe de rotation commun (12) des roues dentées frontales (1, 2) et une région de contact d'au moins une des roues dentées frontales (1, 2) avec la crémaillère respective (3, 4, 5) est minimal.
